# EUROPEAN PATENT SPECIFICATION

(11) **EP 2 508 806 B1**
(45) Date of publication and mention of the grant of the patent: **27.09.2017**
(21) Application number: 12001735.5
(22) Date of filing: 14.03.2012
(51) Int. Cl.: F24D 11/02, F24D 19/10

(54) **Heat pump system and heat pump unit controlling method**
Steuerungsverfahren für Wärmepumpensystem und Wärmepumpeneinheit
Système de pompe à chaleur et procédé de commande de l'unité de pompe à chaleur

(30) Priority: 07.04.2011 JP 2011085679
(43) Date of publication of application: 10.10.2012
(73) Proprietor: Mitsubishi Electric Corporation, Tokyo 100-8310 (JP)
(72) Inventor: Matsuzawa, Koji, Chiyoda-ku Tokyo 100-8310 (JP)
(74) Representative: Pfenning, Meinig & Partner mbB

(56) References cited:
- EP-A1- 2 261 574
- EP-A2- 2 213 950
- DE-A1- 3 423 262
- JP-A- 2010 008 036

## Description

### [Technical Field]

The present invention relates to a control technique for a compressor provided to a heat pump system and, more particularly, to a control technique for a compressor in a case where the load is comparatively low as in an interim period between seasons.

### [Background Art]

A heat pump type room heating system is conventionally available which generates hot water using a heat pump unit and supplies the generated hot water to a panel heater or the like, thereby performing room heating operation.

In the heat pump type room heating system, the target temperature is set in accordance with the load of the operation or the like, and the heat pump unit is controlled such that the temperature (inflow temperature) of the hot water supplied to the panel heater or the like becomes equal to the target temperature. At this time, for each heat pump unit, a temperature between the minimum temperature and maximum temperature predetermined before shipping or the like is set as the target temperature.

In the heat pump type room heating system, to proceed with energy conservation, it is significant to operate the heat pump unit continuously as long as possible within a range not impairing the indoor amenities, by utilizing the characteristics of inverter control of the heat pump unit.

If the target temperature is low, however, even when the room heating system is operated while suppressing the capacity of the heat pump unit as low as possible, the inflow temperature will exceed the target temperature very soon. In this case, the room heating system repeatedly continues the operation of temporarily stopping the heat pump unit when the inflow temperature exceeds the target temperature and operating the heat pump unit again when the inflow temperature falls below the target temperature. In other words, the continuous operation of the heat pump unit cannot be achieved. This is not preferable in promoting energy conservation.

Patent Literature 1 describes continuous operation of the heat pump unit by forcibly manipulating the inflow temperature and the return temperature using a room heating mixing valve and a variable flow-rate circulating pump.

### [Citation List]

### [Patent Literature]

[Patent Literature 1] JP 2010-8036

JP2010008036A provides a heating system capable of keeping COP from decreasing when regulating ongoing temperature and return temperature depending on the heating load of a heating terminal. The document discloses a heat pump system according to the preamble of claim 1 and a heat pump unit controlling method according to the preamble of claim 8. EP2261574A1 discloses a heat-pump hot water apparatus which corrects the output of the circulation pump such that the circulating water flow rate is controlled to the setting value when the flow rate is different from the setting value due to resistance caused by the length or the number of the bending parts of the circulating path between the hot water storage tank and a water-cooling medium heat exchanger. DE3423262A1 discloses method for regulating the capacity of a compression heat pump which, in association with a boiler, acts on a central heating installation. In this method, the heat pump is regulated depending upon the temperature of the heating return line and the boiler depending upon the temperature of the heating flow line. EP2213950A2 discloses a liquid circulation heating system includes a heat pump for producing a heated liquid and a heating radiator.

### [Summary of Invention]

### [Technical Problem]

It is costly to install a room heating mixing valve and a variable flow-rate circulating pump. In Europe, for example, generally, when building a room heating system, the local installation dealer selects the circulating pump and the like arbitrarily. There is a possibility that a room heating mixing valve and a variable flow-rate circulating pump are not installed.

It is an object of the present invention to realize continuous operation of a heat pump unit without using a special device such as a room heating mixing valve or a variable flow-rate circulating pump.

### [Solution to Problem]

A heat pump system according to the present invention is provided with a heat pump unit having a compressor and supplies a fluid heated by the heat pump unit to a fluid-using device that uses the fluid. The heat pump system includes:
an inflow temperature measurement part which measures a temperature of the fluid flowing into the fluid-using device, as an inflow temperature:
   an outflow temperature measurement part which measures a temperature of the fluid flowing out from the fluid-using device, as an outflow temperature;
   a change rate calculation part which calculates a change rate per predetermined time of the inflow temperature measured by the inflow temperature measurement part, as an inflow temperature change rate sequentially since start of operation of the compressor, and calculates a change rate per predetermined time of the outflow temperature measured by the outflow temperature measurement part, as an outflow temperature change rate sequentially since start of operation of the compressor;
   a minimum temperature setting part which sets, as a minimum temperature, the inflow temperature with which a difference between the inflow temperature change rate and outflow temperature change rate calculated by the change rate calculation part becomes not more than a preset change rate threshold;
   a target temperature setting part which sets a temperature not less than the minimum temperature set by the minimum temperature setting part, as a target temperature; and
   a control part which controls the compressor of the heat pump unit such that the temperature of the fluid flowing into the fluid-using device becomes equal to the target temperature set by the target temperature setting part.

### [Advantageous Effects of Invention]

In the heat pump system according to the present invention, the minimum value preset before shipping or the like is not utilized. Instead, the minimum value of the target temperature of the inflow temperature is appropriately fixed according to the environment where the heat pump system is installed, and control operation is performed such that an unnecessarily low target temperature will not be set. Hence, the heat pump unit can be operated continuously, promoting energy conservation.

### [Brief Description of Drawings]

The present invention will become fully understood from the detailed description given hereinafter in conjunction with the accompanying drawings, in which:

Fig. 1 is a configuration diagram of a heat pump system 200 according to Embodiment 1;
Fig. 2 is a configuration diagram of a control unit 100 according to Embodiment 1;
Fig. 3 is a flowchart showing the flow of the control process of the control unit 100 according to Embodiment 1; and
Fig. 4 is a graph for explaining the control process of the control unit 100 according to Embodiment 1.

### [Description of Embodiments]

In describing preferred embodiments illustrated in the drawings, specific terminology is employed for the sake of clarity. However, the disclosure of the present invention is not intended to be limited to the specific terminology so selected, and it is to be understood that each specific element includes all technical equivalents that operate in a similar manner and achieve a similar result.

### Embodiment 1.

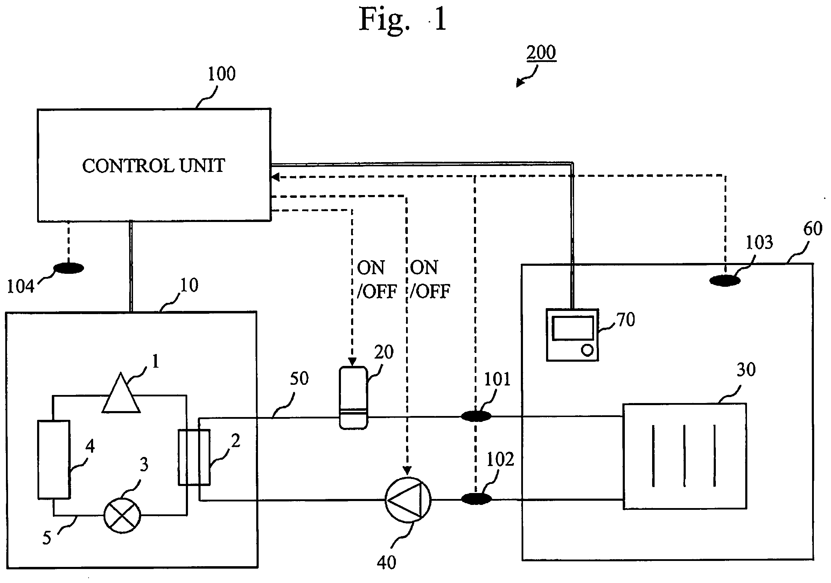

Fig. 1 is a configuration diagram of a heat pump system 200 according to Embodiment 1.

The heat pump system 200 includes a heat pump unit 10, an auxiliary heat source 20, a heat dissipator 30 (an example of a fluid-using device) installed in an indoor space 60, and a pump 40, which are connected sequentially via a fluid pipe 50. The fluid pipe 50 is connected to a heat exchanger 2 provided to the heat pump unit 10. Water (an example of the fluid) flows through the fluid pipe 50.

A remote controller 70 to enter a preset temperature or the like is placed in the indoor space 60 where the heat dissipator 30 is installed.

The heat pump unit 10 has a heat pump cycle formed by sequentially connecting a compressor 1, the heat exchanger 2, an expansion mechanism 3, and a heat exchanger 4 via a refrigerant pipe 5. As a refrigerant circulates in the heat pump cycle in the order of the compressor 1, the heat exchanger 2, the expansion mechanism 3, and the heat exchanger 4, the refrigerant absorbs heat from air or the like with the heat exchanger 4, and dissipates heat with the heat exchanger 2 to the water flowing in the fluid pipe 50. In other words, the heat pump unit 10 heats the water flowing in the fluid pipe 50, thus making hot water.

The auxiliary heat source 20 further heats the hot water heated by the heat pump unit 10. For example, the auxiliary heat source 20 is an electric heater.

The heat dissipator 30 dissipates the heat of the hot water heated by the heat pump unit 10 and auxiliary heat source 20 to the air in the indoor space 60. Consequently, the interior of the indoor space 60 becomes warm, and the hot water is cooled into cold water. For example, the heat dissipator 30 is a floor heating panel or panel heater, or a fan coil unit. The floor heating panel or panel heater exchanges heat between the hot water and the air through heat exchange of natural convection achieved by heat radiation. The fan coil unit exchanges heat between the hot water and the air through heat exchange of forced convection achieved by an internal fan.

The pump 40 circulates water in the fluid pipe 50. More specifically, when the pump 40 operates, water circulates through the heat pump unit 10, auxiliary heat source 20, and heat dissipator 30 in this order. As described above, water is subjected to the repeated operation of heating by the heat pump unit 10, then further heating by the auxiliary heat source 20, and cooling by the heat dissipator 30. As a result, the indoor space 60 is heated.

The heat pump system 200 also includes temperature sensors 101 to 104.

The temperature sensor 101 (inflow temperature measuring part) measures the temperature of water flowing into the heat dissipator 30, as an inflow temperature. The temperature sensor 102 (outflow temperature measuring part) measures the temperature of water flowing out from the heat dissipator 30, as an outflow temperature. The temperature sensor 103 (indoor temperature measurement part) measures the temperature of the air in the indoor space 60, as an indoor temperature. The temperature sensor 104 (outdoor air temperature measuring part) measures the temperature of outdoor air.

The heat pump system 200 also includes a control unit 100 comprised of a microcomputer and the like.

The control unit 100 acquires the temperatures measured by the temperature sensors 101 to 104, the preset temperature entered by the remote controller 70, the operation frequency of the heat pump unit 10 (compressor 1), and the like. Based on the acquired information, the control unit 100 sets the target temperature, and controls the heat pump unit 10 such that the temperature of the water to be supplied to the heat dissipator 30 becomes equal to the target temperature. Based on the acquired information, the control unit 100 also performs on/off control of the auxiliary heat source 20 and of the pump 40.

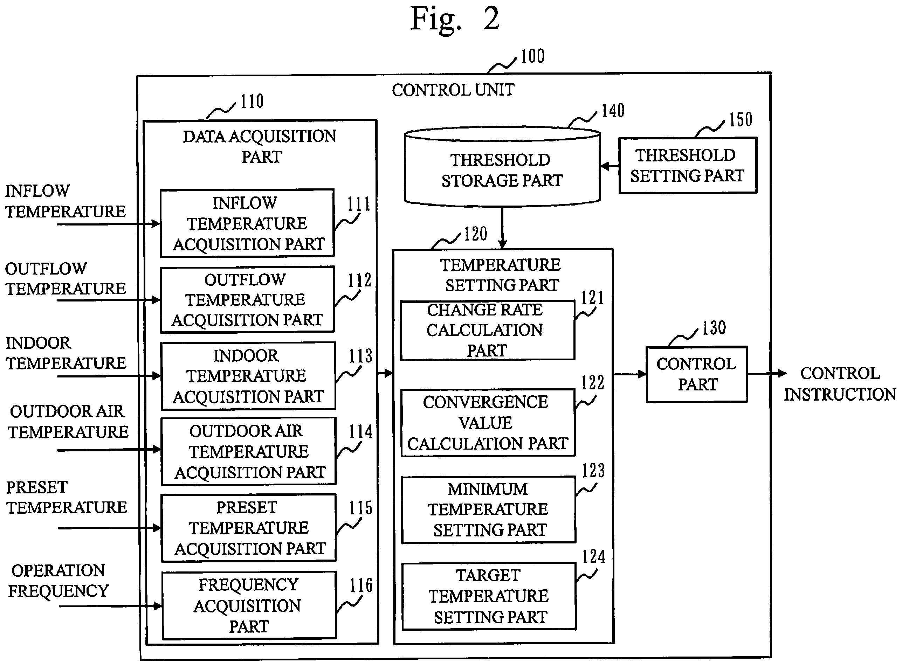

Fig. 2 is a configuration diagram of the control unit 100 according to Embodiment 1.

The control unit 100 includes a data acquisition part 110, a temperature setting part 120, a control part 130, a threshold storage part 140, and a threshold setting part 150.

The data acquisition part 110 includes an inflow temperature acquisition part 111, an outflow temperature acquisition part 112, an indoor temperature acquisition part 113, an outdoor air temperature acquisition part 114, a preset temperature acquisition part 115, and a frequency acquisition part 116.

The inflow temperature acquisition part 111 acquires the inflow temperature measured by the temperature sensor 101. The outflow temperature acquisition part 112 acquires the outflow temperature measured by the temperature sensor 102. The indoor temperature acquisition part 113 acquires the indoor temperature measured by the temperature sensor 103. The outdoor air temperature acquisition part 114 acquires the outdoor air temperature measured by the temperature sensor 104. The preset temperature acquisition part 115 acquires the preset temperature entered by the remote controller 70. The frequency acquisition part 116 acquires the operation frequency from the heat pump unit 10.

The temperature setting part 120 includes a change rate calculation part 121, a convergence value calculation part 122, a minimum temperature setting part 123, and a target temperature setting part 124.

Based on the inflow temperature acquired by the inflow temperature acquisition part 111, the change rate calculation part 121 calculates the change rate of the inflow temperature per predetermined period of time (for example, 30 seconds in this case) at every preset time (for example, 15 seconds in this case) since the start of operation of the heat pump unit 10. Based on the outflow temperature acquired by the outflow temperature acquisition part 112, the change rate calculation part 121 also calculates the change rate of the outflow temperature per predetermined period of time (30 seconds) at every preset time (15 seconds) since the start of operation of the heat pump unit 10.

The change of rate of the inflow temperature can be calculated from the inflow temperature measured at a certain time point and the inflow temperature measured at a time point preceding the certain time point by a predetermined period of time (30 seconds). The change rate of the outflow temperature can be calculated in the same manner as the change rate of the inflow temperature.

The change rate of the inflow temperature will be called an inflow temperature change rate, and the change rate of the outflow temperature will be called an outflow temperature change rate.

Based on the inflow temperature acquired by the inflow temperature acquisition part 111, the convergence value calculation part 122 calculates the convergence value of the inflow temperature at every preset time (15 seconds) since the start of operation of the heat pump unit 10. Based on the outflow temperature acquired by the outflow temperature acquisition part 112, the convergence value calculation part 122 also calculates the convergence value of the outflow temperature at every preset time (15 seconds) since the start of operation of the heat pump unit 10.

The convergence value of the inflow temperature can be calculated by calculating the curve of change of the inflow temperature from, for example, inflow temperatures measured at certain three time points. The convergence value of the outflow temperature can also be calculated in the same manner as the convergence value of the inflow temperature.

The convergence value of the inflow temperature will be called an inflow temperature convergence value, and the convergence value of the outflow temperature will be called an outflow temperature convergence value.

The minimum temperature setting part 123 sets the minimum temperature based on the inflow temperature change rate and outflow temperature change rate calculated by the change rate calculation part 121, the inflow temperature convergence value and outflow temperature convergence value calculated by the convergence value calculation part 122, the inflow temperature acquired by the inflow temperature acquisition part 111, and the outflow temperature acquired by the outflow temperature acquisition part 112.

More specifically, the minimum temperature setting part 123 sets, as the minimum temperature, the inflow temperature with which the difference between the inflow temperature change rate and the outflow temperature change rate is equal to or less than the change rate threshold stored in the threshold storage part 140 (to be described later); the difference between the inflow temperature convergence value and the outflow temperature convergence value is equal to or less than the convergence value threshold stored in the threshold storage part 140; and the difference between the inflow temperature and the outflow temperature is equal to or less than the temperature threshold stored in the threshold storage part 140.

Based on the indoor temperature acquired by the indoor temperature acquisition part 113, the outdoor air temperature acquired by the outdoor air temperature acquisition part 114, the preset temperature acquired by the preset temperature acquisition part 115, the operation frequency acquired by the frequency acquisition part 116, and the like, the target temperature setting part 124 sets a temperature equal to or higher than the minimum temperature set by the minimum temperature setting part 123, as the target temperature.

The method with which the target temperature setting part 124 calculates the target temperature can be of any type although various methods have conventionally been employed. When the calculated target temperature is less than the minimum temperature, the target temperature setting part 124 sets the minimum temperature, as the target temperature.

The control part 130 controls the heat pump unit 10 so the inflow temperature becomes equal to the target temperature set by the target temperature setting part 124. If a sufficient heating amount cannot be obtained with only the heat pump unit 10, the auxiliary heat source 20 is turned on so the inflow temperature becomes equal to the target temperature.

The threshold storage part 140 is a storage device that stores the change rate threshold, the convergence value threshold, and the temperature threshold.

The threshold setting part 150 stores the change rate threshold, the convergence value threshold, and the temperature threshold in the threshold storage part 140.

The threshold setting part 150 stores the average value of the difference between the inflow temperature and outflow temperature measured when the load is high (the load is equal to or more than a predetermined value) as in winter, in the threshold storage part 140 as the convergence value threshold or temperature threshold. The threshold setting part 150 also stores the change rate threshold entered from the remote controller 70 or the like in the threshold storage part 140.

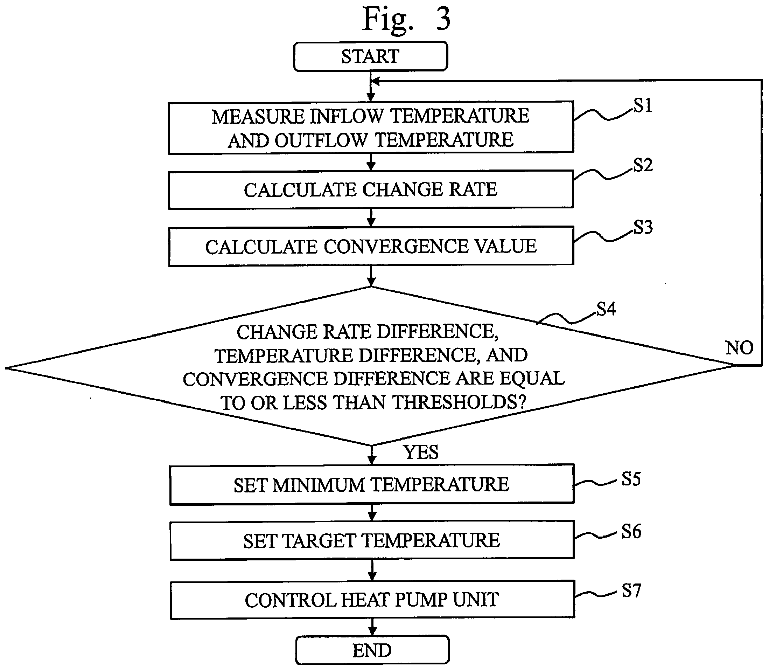

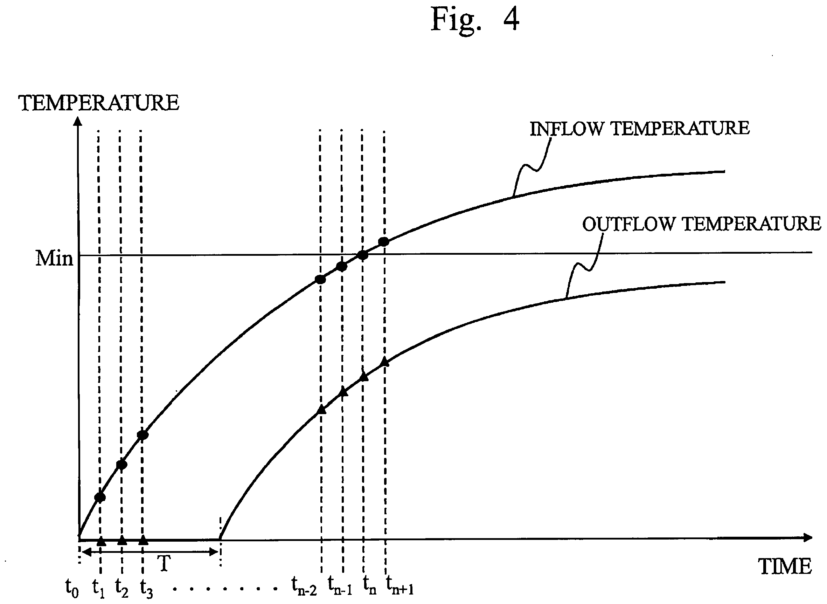

Fig. 3 is a flowchart showing the flow of the control process of the control unit 100 according to Embodiment 1. Fig. 4 is a graph for explaining the control process of the control unit 100 according to Embodiment 1.

When the heat pump unit 10 starts operation, the control unit 100 starts the control process shown in Fig. 3. In Fig. 4, the heat pump unit 10 starts operation at a time point to. In Fig. 4, the axis of abscissa indicating the time is marked with t₁, t₂,... at every preset time (15 seconds).

When the operation of the heat pump unit 10 is to be started, the heat pump unit 10 is controlled by a predetermined frequency such as a rated frequency.

### (S1: Temperature Measuring Process)

The inflow temperature acquisition part 111 acquires the inflow temperature measured by the temperature sensor 101, at every preset time (15 seconds), and the outflow temperature acquisition part 112 acquires the outflow temperature measured by the temperature sensor 102, at every preset time (15 seconds).

Fig. 4 shows that the inflow temperature and the outflow temperature are measured at every 15 seconds since the start of operation, for example, at to (0 second after the start of operation), at t₁ (15 seconds after the start of operation), at t₂ (30 seconds after the start of operation), and so on.

### (S2: Change Rate Calculation Process)

The change rate calculation part 121 calculates the inflow temperature change rate at the current time point from the latest inflow temperature acquired in S1 and the inflow temperature of a time point preceding the current time point by a predetermined time (30 seconds). The change rate calculation part 121 also calculates the outflow temperature change rate at the current time point from the latest outflow temperature acquired in S1 and the outflow temperature of a time point preceding the current time point by a predetermined time (30 seconds).

For example, in Fig. 4, the inflow temperature change rate and the outflow temperature change rate are calculated at every 15 seconds since the time point t₂ which is 30 seconds after the operation is started. For example, at a time point tₙ of Fig. 4, the inflow temperature change rate is calculated from the inflow temperature measured at the time point tₙ and the inflow temperature measured at the time point tₙ₋₂. Likewise, at the time point tₙ of Fig. 4, the outflow temperature change rate is calculated from the outflow temperature measured at the time point tₙ and the outflow temperature measured at the time point tₙ₋₂.

### (S3: Convergence Value Calculation Process)

The convergence value calculation part 122 calculates the inflow temperature convergence value at the current time point from the latest inflow temperature acquired in S1, the inflow temperature of a time point preceding the current time point by a preset time (15 seconds), and the inflow temperature of a time point preceding the 15-second-preceding time point by a preset time (15 seconds) (that is, preceding the current time point by 30 seconds). The convergence value calculation part 122 also calculates the outflow temperature convergence value at the current time point from the latest outflow temperature acquired in S1, the outflow temperature of a time point preceding the current time point by a preset time (15 seconds), and the outflow temperature of a time point preceding the 15-second-preceding time point by a preset time (15 seconds).

For example, in Fig. 4, the inflow temperature convergence value and the outflow temperature convergence value are calculated at every 15 seconds since the time point t₂ which is 30 seconds after the operation is started. For example, at time point tₙ of Fig. 4, the inflow temperature convergence value is calculated from the inflow temperatures measured at the time points tₙ, tₙ₋₁, and tₙ₋₂. Likewise, at the time point tₙ of Fig. 4, the outflow temperature convergence value is calculated from the outflow temperatures measured at the time points tₙ, tₙ₋₁, and tₙ₋₂.

### (S4: Determination Process)

The minimum temperature setting part 123 checks whether or not the difference (change rate difference) between the inflow temperature change rate and the outflow temperature change rate is equal to or less than the change rate threshold, whether or not the difference (convergence value difference) between the inflow temperature convergence value and the outflow temperature convergence value is equal to or less than the convergence value threshold, and whether or not the difference (temperature difference) between the inflow temperature and the outflow temperature is equal to or less than the temperature threshold.

If the respective differences are all equal to or less than the corresponding thresholds (YES in S4), the process of the minimum temperature setting part 123 advances to S5. If any one difference is higher than the corresponding threshold (NO in S4), the process of the minimum temperature setting part 123 returns to S1, and the change rate difference, convergence value difference, and temperature difference at a time point which is after the current time point by the preset time (15 seconds) are checked.

For example, it is checked, of Fig. 4, whether or not the change rate difference at the time point tₙ is equal to or less than the change rate threshold, whether or not the convergence value difference at the time point tₙ is equal to or less than the convergence value threshold, and whether or not the temperature difference at the time point tₙ is equal to or less than the temperature threshold. If the respective differences are all equal to or less than the corresponding thresholds (YES in S4), the process of the minimum temperature setting part 123 advances to S5. If any one difference is higher than the corresponding threshold (NO in S4), the process of the minimum temperature setting part 123 returns to S1, and the change rate difference, convergence value difference, and the temperature difference at the time point tₙ₊₁ are checked.

### (S5: Minimum Temperature Setting Process)

The minimum temperature setting part 123 sets, as the minimum temperature, the inflow temperature measured at a time point where the respective values are all equal to or less than the corresponding thresholds.

For example, if it is determined in S4 that the respective values at the time point tₙ of Fig. 4 are equal to or less than the corresponding thresholds, an inflow temperature Min measured at the time point tₙ is set as the minimum temperature.

### (S6: Target Temperature Setting Process)

The target temperature setting part 124 calculates the target temperature in accordance with a predetermined method. If the target temperature obtained by calculation is less than the minimum temperature set in S5, the minimum temperature set in S5 is determined as the target temperature. Hence, a temperature equal to or higher than the minimum temperature is set as the target temperature.

### (S7: Control Process)

The control part 130 controls the heat pump unit 10 such that the inflow temperature becomes equal to the target temperature set in S6.

As shown in Fig. 4, when the heat pump unit 10 starts operation, the inflow temperature starts to rise immediately, but the outflow temperature starts to rise only after the lapse of a certain period of time (T in Fig. 4). The time difference T between the time point at which the inflow temperature starts to rise and the time point at which the outflow temperature starts to rise corresponds to the time taken since the water passes through the temperature sensor 101 until returning to the temperature sensor 102 via the heat dissipator 30. Among the heat pump systems 200, the heat dissipator 30 is arranged differently, and the number of units of the heat dissipators 30 and the like differs, so the total length of the fluid pipes 50 that connect the heat dissipators 30 differs. Therefore, the time taken since the water passes through the temperature sensor 101 until returning to the temperature sensor 102 differs among the heat pump systems 200.

Also, the change curves of the inflow temperature and outflow temperature differ depending on the capacity of the heat dissipator 30 to be installed, the room heating load, and the like.

In the heat pump system 200 according to Embodiment 1, the minimum temperature is set by calculation using the inflow temperature and outflow temperature. Therefore, the minimum temperature can be set by considering the length of the fluid pipes 50, the capacity of the heat dissipator 30, the room heating load, and the like that differ among the heat pump systems 200.

As a result, the heat pump unit 10 can be prevented from being repeatedly turned on/off due to an excessively low preset target temperature, so the continuous operation of the heat pump unit 10 can be realized. This promotes energy conservation.

Particularly, with the heat pump system 200 according to Embodiment 1, the temperature threshold and the convergence value threshold are determined based on the temperature difference between the inflow temperature and outflow temperature of a case where the room heating load is high as in winter. Therefore, an appropriate temperature threshold and an appropriate convergence value threshold can be set for each heat pump system 200. An appropriate minimum temperature can also be set accordingly.

In S5 of Fig. 3, the minimum temperature setting part 123 may correct the minimum temperature based on the operation frequency acquired by the frequency acquisition part 116. Usually, the heat pump unit 10 operates more efficiently if it operates at a frequency close to the rated frequency. In view of this, the minimum temperature setting part 123 may correct the minimum temperature such that the operation frequency of the heat pump unit 10 becomes close to the rated frequency.

Further, in S5 of Fig. 3, the minimum temperature setting part 123 may correct the minimum temperature based on the outdoor air temperature acquired by the outdoor air temperature acquisition part 114. The curve indicating the relation between the operation efficiency and operation frequency of the heat pump unit 10 changes according to the outdoor air temperature. In view of this, the minimum temperature setting part 123 may correct the minimum temperature considering the outdoor air temperature, such that the operation frequency of the heat pump unit 10 becomes close to the rated frequency.

In S5 of Fig. 3, the minimum temperature setting part 123 may correct the minimum temperature based on the indoor temperature acquired by the indoor temperature acquisition part 113 or the preset temperature acquired by the preset temperature acquisition part 115. For example, in the operation of the heat pump unit 10 at the minimum preset temperature, if the indoor temperature exceeds the preset temperature, the minimum temperature setting part 123 may lower the minimum temperature.

In the above description, the minimum temperature is set based on the three indices, that is, the change rate difference, the convergence value difference, and the temperature difference. Alternatively, the minimum temperature may be set based on only one, or any two, of the change rate difference, the convergence value difference, and the temperature difference. Any embodiment which does not include the feature whereby the minimum temperature is set based on the change rate difference does not fall within the scope of the claims.

Numerous additional modifications and variations are possible in light of the above teachings. It is therefore to be understood that, within the scope of the appended claims, the disclosure of this patent specification may be practiced otherwise than as specifically described herein.

### [Reference Signs List]

- 1:: compressor;
- 2:: heat exchanger;
- 3:: expansion mechanism;
- 4:: heat exchanger;
- 5:: refrigerant pipe;
- 10:: heat pump unit;
- 20:: auxiliary heat source;
- 30:: heat dissipator;
- 40:: pump;
- 50:: fluid pipe;
- 60:: indoor space;
- 70:: remote controller;
- 100:: control unit;
- 101, 102, 103, 104:: temperature sensor;
- 110:: data acquisition part;
- 111:: inflow temperature acquisition part;
- 112:: outflow temperature acquisition part;
- 113:: indoor temperature acquisition part;
- 114:: outdoor air temperature acquisition part;
- 115:: preset temperature acquisition part;
- 116:: frequency acquisition part;
- 120:: temperature setting part;
- 121:: change rate calculation part;
- 122:: convergence value calculation part;
- 123:: minimum temperature setting part;
- 124:: target temperature setting part;
- 130:: control part;
- 140:: threshold storage part;
- 150:: threshold setting part;
- 200:: heat pump system

## Claims

1. A heat pump system which is provided with a heat pump unit (10) having a compressor (1) and which is arranged for supplying a fluid heated by the heat pump unit to a fluid-using device that uses the fluid, the heat pump system comprising:
an inflow temperature measurement part (101) for measuring a temperature of the fluid flowing into the fluid-using device, as an inflow temperature:
an outflow temperature measurement part (102) for measuring a temperature of the fluid flowing out from the fluid-using device, as an outflow temperature;
**characterized in that** the heat pump system comprises a change
rate calculation part (121) for calculating a change rate per predetermined time of the inflow temperature measured by the inflow temperature measurement part, as an inflow temperature change rate sequentially since start of operation of the compressor, and the change rate calculating part is arranged for calculating a change rate per predetermined time of the outflow temperature measured by the outflow temperature measurement part, as an outflow temperature change rate sequentially since start of operation of the compressor;
a minimum temperature setting part (123) for setting, as a minimum temperature, the inflow temperature with which a difference between the inflow temperature change rate and outflow temperature change rate calculated by the change rate calculation part becomes not more than a preset change rate threshold;
a target temperature setting part (124) for setting a temperature not less than the minimum temperature set by the minimum temperature setting part, as a target temperature; and
a control part (130) for controlling the compressor of the heat pump unit such that the temperature of the fluid flowing into the fluid-using device becomes equal to the target temperature set by the target temperature setting part.

2. The heat pump system according to claim 1,
wherein the minimum temperature setting part is arranged for setting, as the minimum temperature, the inflow temperature with which the difference between the inflow temperature change rate and the outflow temperature change rate becomes not more than the change rate threshold and a difference between the inflow temperature and the outflow temperature becomes not more than a preset temperature threshold.

3. The heat pump system according to claim 2, further comprising:
a convergence value calculation part (122) for calculating a convergence value of the inflow temperature from a change in inflow temperature measured by the inflow temperature measurement part, as an inflow temperature convergence value sequentially since start of operation of the compressor, and the convergence value calculation part is arranged for calculating a convergence value of the outflow temperature from a change in outflow temperature measured by the outflow temperature measurement part, as an outflow temperature convergence value sequentially since start of operation of the compressor,
wherein the minimum temperature setting part is arranged for setting, as the minimum temperature, the inflow temperature with which the difference between the inflow temperature change rate and the outflow temperature change rate becomes not more than the change rate threshold, the difference between the inflow temperature and the outflow temperature becomes not more than the temperature threshold, and a difference between the inflow temperature convergence value and outflow temperature convergence value calculated by the convergence value calculation part becomes not more than a preset convergence value threshold.

4. The heat pump apparatus according to any one of claims 1 to 3,
wherein the minimum temperature setting part is arranged for correcting the preset minimum temperature in accordance with an operation frequency of the compressor which is measured at a time point where the minimum temperature is set.

5. The heat pump system according to any one of claims 1 to 4, further comprising:
an outdoor air temperature measurement part (114) for measuring an outdoor air temperature,
wherein the minimum temperature setting part is arranged for correcting the minimum temperature in accordance with the outdoor air temperature measured by the outdoor air temperature measurement part.

6. The heat pump system according to any one of claims 1 to 5,
wherein the fluid-using device comprises a heat exchanger for exchanging heat between the fluid and air of a predetermined room,
wherein the heat pump apparatus further comprises a preset temperature acquisition part (115) for acquiring a preset temperature of the room; and wherein the minimum temperature setting part is arranged for correcting the minimum temperature in accordance with the preset temperature acquired by the preset temperature acquisition part.

7. The heat pump system according to claim 2, further comprising:
a threshold setting part (150) for setting, as the temperature threshold, the temperature difference between the inflow temperature and the outflow temperature measured when a room heating load is not less than a predetermined value.

8. A heat pump unit controlling method for a heat pump system which is provided with a heat pump unit (10) having a compressor (1) and supplies a fluid heated by the heat pump unit to a fluid-using device that uses the fluid, the heat pump unit controlling method comprising:
measuring a temperature of the fluid flowing into the fluid-using device, as an inflow temperature:
measuring a temperature of the fluid flowing out from the fluid-using device, as an outflow temperature;
**characterized in that** the heat pump unit controlling method comprises
calculating a change rate per predetermined time of the inflow temperature, as an inflow temperature change rate sequentially since start of operation of the compressor, and calculating a change rate per predetermined time of the outflow temperature, as an outflow temperature change rate sequentially since start of operation of the compressor;
setting, as a minimum temperature, the inflow temperature with which a difference between the inflow temperature change rate and outflow temperature change rate becomes not more than a preset change rate threshold;
setting a temperature not less than the minimum temperature, as a target temperature; and
controlling the compressor of the heat pump unit such that the temperature of the fluid flowing into the fluid-using device becomes equal to the target temperature.

## Patentansprüche

1. Wärmepumpensystem, das mit einer Wärmepumpeneinheit (10), die einen Verdichter (1) aufweist, ausgestattet ist und das angeordnet ist, um ein Fluid, das durch die Wärmepumpeneinheit erwärmt wird, einer Fluid verwendenden Einrichtung, die das Fluid verwendet, zuzuführen, wobei das Wärmepumpensystem umfasst:
ein Einströmtemperaturmessungsteil (101) zum Messen einer Temperatur des Fluids, das in die Fluid verwendende Einrichtung einströmt, als eine Einströmtemperatur;
ein Ausströmtemperaturmessungsteil (102) zum Messen einer Temperatur des aus der Fluid verwendenden Einrichtung ausströmenden Fluids, als eine Ausströmtemperatur;
**dadurch gekennzeichnet, dass** das Wärmepumpensystem umfasst:
ein Änderungsratenberechnungsteil (121) zum Berechnen einer Änderungsrate je vorbestimmter Zeit der durch den Einströmtemperaturmessungsteil gemessenen Einströmtemperatur, als eine Einströmtemperaturänderungsrate, sequentiell ab dem Start des Betriebs des Verdichters, und der Änderungsratenberechnungsteil angeordnet ist, um eine Änderungsrate je vorbestimmter Zeit der durch den Ausströmtemperaturmessungsteil gemessenen Ausströmtemperatur zu berechnen, als eine Ausströmtemperaturänderungsrate, sequentiell ab dem Start des Betriebs des Verdichters;
ein Mindesttemperatureinstellungsteil (123) zum Einstellen, als eine Mindesttemperatur, der Einströmtemperatur, mit welcher eine Differenz zwischen der durch den Änderungsratenberechnungsteil berechneten Einströmtemperaturänderungsrate und
Ausströmtemperaturänderungsrate nicht mehr wird als ein vorgegebener Änderungsraten-Schwellenwert;
ein Zieltemperatureinstellungsteil (124) zum Einstellen einer Temperatur, die nicht geringer ist als die durch den Mindesttemperatureinstellungsteil eingestellte Mindesttemperatur, als eine Zieltemperatur; und
ein Steuerteil (130) zum Steuern des Verdichters der Wärmepumpeneinheit, so dass die Temperatur des in die Fluid verwendende Einrichtung einströmenden Fluids gleich wird wie die durch den Zieltemperatureinstellungsteil eingestellte Zieltemperatur.

2. Wärmepumpensystem nach Anspruch 1,
wobei der Mindesttemperatureinstellungsteil angeordnet ist zum Einstellen, als die Mindesttemperatur, der Einströmtemperatur, mit welcher die Differenz zwischen der Einströmtemperaturänderungsrate und der Ausströmtemperaturänderungsrate nicht mehr wird als der Änderungsratenschwellenwert, und eine Differenz zwischen der Einströmtemperatur und der Ausströmtemperatur nicht mehr wird als ein Solltemperatur-Schwellenwert.

3. Wärmepumpensystem nach Anspruch 2, weiter umfassend:
ein Konvergenzwertberechnungsteil (122) zum Berechnen eines Konvergenzwerts der Einströmtemperatur aus einer Änderung der durch den Einströmtemperaturmessungsteil gemessenen Einströmtemperatur, als einen Einströmtemperaturkonvergenzwert, sequentiell ab dem Start des Betriebs des Verdichters, und der Konvergenzwertberechnungsteil eingerichtet ist, um einen Konvergenzwert der Ausströmtemperatur aus einer Änderung der durch den Ausströmtemperaturmessungsteil gemessenen Ausströmtemperatur zu berechnen, als einen Ausströmtemperaturkonvergenzwert, sequentiell ab dem Start des Betriebs des Verdichters,
wobei das Mindesttemperatureinstellungsteil angeordnet ist, um als die Mindesttemperatur die Einströmtemperatur einzustellen, mit welcher die Differenz zwischen der Einströmtemperaturänderungsrate und der Ausströmtemperaturänderungsrate nicht mehr wird als der Änderungsratenschwellenwert, die Differenz zwischen der Einströmtemperatur und der Ausströmtemperatur nicht mehr wird als der Temperaturschwellenwert, und eine Differenz zwischen dem durch den Konvergenzwertberechnungsteil berechneten Einströmtemperaturkonvergenzwert und Ausströmtemperaturkonvergenzwert nicht mehr wird als ein vorgegebener Konvergenzwert-Schwellenwert.

4. Wärmepumpenvorrichtung nach einem der Ansprüche 1 bis 3,
wobei der Mindesttemperatureinstellungsteil angeordnet ist, um die vorgegebene Mindesttemperatur in Entsprechung mit einer Betriebsfrequenz des Verdichters, die zu einem Zeitpunkt gemessen wird, wenn die Mindesttemperatur eingestellt wird, zu korrigieren.

5. Wärmepumpensystem nach einem der Ansprüche 1 bis 4, ferner umfassend:
einen Außenlufttemperaturmessungsteil (114) zum Messen einer Außenlufttemperatur, wobei der Mindesttemperatureinstellungsteil eingerichtet ist, um die Mindesttemperatur in Entsprechung mit der durch den Außenlufttemperaturmessungsteil gemessenen Außenlufttemperatur zu korrigieren.

6. Wärmepumpensystem nach einem der Ansprüche 1 bis 5,
wobei die Fluid verwendende Einrichtung einen Wärmetauscher umfasst, um Wärme zwischen dem Fluid und Luft eines vorherbestimmten Raums auszutauschen,
wobei die Wärmepumpenvorrichtung des Weiteren ein Vorgegebene-Temperaturakquirierungsteil (115) umfasst, um eine Solltemperatur des Raums zu akquirieren; und
wobei der Mindesttemperatureinstellungsteil eingerichtet ist, um die Mindesttemperatur in Entsprechung mit der durch den Solltemperaturakquirierungsteil akquirierten Solltemperatur zu korrigieren.

7. Wärmepumpensystem nach Anspruch 2, ferner umfassend:
ein Schwellenwerteinstellungsteil (150), um als den Temperaturschwellenwert die Temperaturdifferenz zwischen der Einströmtemperatur und der Ausströmtemperatur, die gemessen werden, wenn die Raumwärmelast nicht geringer ist als ein vorbestimmter Wert, einzustellen.

8. Wärmepumpeneinheit-Steuerverfahren für ein Wärmepumpensystem, welches mit einer Wärmepumpeneinheit (10), die einen Verdichter (1) aufweist, ausgestattet ist und ein Fluid, das durch die Wärmepumpeneinheit erwärmt wird, einer Fluid verwendenden Einrichtung, die das Fluid verwendet, zuführt, wobei das Wärmepumpeneinheit-Steuerverfahren umfasst:
Messen einer Temperatur des Fluids, das in die Fluid verwendende Einrichtung einströmt, als eine Einströmtemperatur;
Messen einer Temperatur des Fluids, das aus der Fluid verwendenden Einrichtung ausströmt, als eine Ausströmtemperatur;
**dadurch gekennzeichnet, dass** das Wärmepumpeneinheit-Steuerverfahren umfasst:
Berechnen einer Änderungsrate je vorbestimmter Zeit der Einströmtemperatur, als eine Einströmtemperaturänderungsrate, sequentiell ab dem Start des Betriebs des Verdichters, und Berechnen einer Änderungsrate je vorbestimmter Zeit der Ausströmtemperatur, als eine Ausströmtemperaturänderungsrate, sequentiell ab dem Start des Betriebs des Verdichters;
Einstellen, als eine Mindesttemperatur, der Einströmtemperatur, mit welcher eine Differenz zwischen der
Einströmtemperaturänderungsrate und der Ausströmtemperaturänderungsrate nicht mehr wird als ein Solländerungsraten-Schwellenwert;
Einstellen einer Temperatur, die nicht niedriger ist als die Mindesttemperatur, als eine Zieltemperatur; und
Steuern des Verdichters der Wärmepumpeneinheit, so dass die Temperatur des Fluids, das in die Fluid verwendende Einrichtung einströmt, gleich wird wie die Zieltemperatur.

## Revendications

1. Système de pompe à chaleur qui est équipé d'une unité de pompe à chaleur (10) qui possède un compresseur (1) et qui est prévu pour fournir un fluide chauffé par l'unité de pompe à chaleur à un dispositif à fluide qui utilise le fluide, le système de pompe à chaleur comprenant :
une partie de mesure de température d'afflux (101) qui permet de mesurer une température du fluide qui s'écoulant vers le dispositif à fluide, en tant que température d'afflux :
une partie de mesure de température de flux sortant (102) qui permet de mesurer une température du fluide qui sort du dispositif à fluide, en tant que température de flux sortant ;
**caractérisé en ce que** le système de pompe à chaleur comprend
une partie de calcul de taux de variation (121) destinée à calculer un taux de variation, sur une durée prédéterminée, de la température d'afflux mesurée par la partie de mesure de température d'afflux, en tant que taux de variation de température d'afflux de manière séquentielle depuis le début du fonctionnement du compresseur, et la partie de calcul de taux de variation est prévue pour calculer un taux de variation, sur une durée prédéterminée, de la température de flux sortant mesurée par la partie de mesure de température de flux sortant, en tant que taux de variation de la température de flux sortant de manière séquentielle depuis le début du fonctionnement du compresseur ;
une partie de réglage de température minimale (123) destinée à régler, en tant que température minimale, la température d'afflux avec laquelle une différence entre le taux de variation de la température d'afflux et le taux de variation de la température de flux sortant calculés par la partie de calcul de taux de variation devient non supérieure à un seuil de taux de variation prédéfini ;
une partie de réglage de température cible (124) destinée à régler une température non inférieure à la température minimale réglée par la partie de réglage de température minimale, en tant que température cible ; et
une partie de commande (130) destinée à contrôler le compresseur de l'unité de pompe à chaleur de sorte que la température du fluide qui s'écoule vers le dispositif à fluide devienne égale à la température cible définie par la partie de réglage de température cible.

2. Système de pompe à chaleur selon la revendication 1,
dans lequel la partie de réglage de température minimale est prévue pour régler, en tant que température minimale, la température d'afflux avec laquelle la différence entre le taux de variation de la température d'afflux et le taux de variation de la température de flux sortant devient non supérieure au seuil de taux de variation, et une différence entre la température d'afflux et la température de flux sortant devient non supérieure à un seuil de température prédéfini.

3. Système de pompe à chaleur selon la revendication 2, comprenant en outre :
une partie de calcul de valeur de convergence (122) destinée à calculer une valeur de convergence de la température d'afflux à partir d'un changement de température d'afflux mesuré par la partie de mesure de température d'afflux, en tant que valeur de convergence de température d'afflux de manière séquentielle depuis le début du fonctionnement du compresseur, et la partie de calcul de valeur de convergence est prévue pour calculer une valeur de convergence de la température de flux sortant à partir d'un changement de la température de flux sortant mesuré par la partie de mesure de température de flux sortant, en tant que valeur de convergence de température de flux sortant de manière séquentielle depuis le début du fonctionnement du compresseur,
dans lequel la partie de réglage de température minimale est prévue pour régler, en tant que température minimale, la température d'afflux avec laquelle la différence entre le taux de variation de température d'afflux et le taux de variation de température de flux sortant devient non supérieure au seuil de taux de variation, la différence entre la température d'afflux et la température de flux sortant devient non supérieure au seuil de température, et une différence entre la valeur de convergence de la température d'afflux et la valeur de convergence de la température de flux sortant calculée par la partie de calcul de valeur de convergence devient non supérieure à un seuil de valeur de convergence prédéfini.

4. Système de pompe à chaleur selon l'une quelconque des revendications 1 à 3,
dans lequel la partie de réglage de température minimale est prévue pour corriger la température minimale prédéfinie selon une fréquence de fonctionnement du compresseur qui est mesurée à un moment où la température minimale est définie.

5. Système de pompe à chaleur selon l'une quelconque des revendications 1 à 4, comprenant en outre :
une partie de mesure de température de l'air extérieur (114) destinée à mesurer une température de l'air extérieur,
dans lequel la partie de réglage de température minimale est prévue pour corriger la température minimale selon la température de l'air extérieur mesurée par la partie de mesure de température de l'air extérieur.

6. Système de pompe à chaleur selon l'une quelconque des revendications 1 à 5, dans lequel le dispositif à fluide comprend un échangeur thermique destiné à échanger la chaleur entre le fluide et l'air d'une pièce prédéterminée,
dans lequel l'appareil à pompe à chaleur comprend en outre une partie d'acquisition de température prédéfinie (115) destinée à acquérir une température prédéfinie de la pièce ; et
dans lequel la partie de réglage de température minimale est prévue pour corriger la température minimale selon la température prédéfinie acquise par la partie d'acquisition de température prédéfinie.

7. Système de pompe à chaleur selon la revendication 2, comprenant en outre :
une partie de définition de seuil (150) destinée à définir, comme seuil de température, la différence de température entre la température d'afflux et la température de flux sortant mesurée lorsqu'une charge de chauffage d'une pièce est non inférieure à une valeur prédéterminée.

8. Procédé de commande d'unité de pompe à chaleur pour un système de pompe à chaleur qui est équipé d'une unité de pompe à chaleur (10) qui possède un compresseur (1) et qui fournit un fluide chauffé par l'unité de pompe à chaleur à un dispositif à fluide qui utilise le fluide, le procédé de commande d'unité de pompe à chaleur comprenant :
la mesure d'une température du fluide qui s'écoule vers le dispositif à fluide, comme température d'afflux ;
la mesure d'une température du fluide qui sort du dispositif à fluide, comme température de flux sortant ;
**caractérisé en ce que** le procédé de commande d'unité de pompe à chaleur comprend
le calcul d'un taux de variation, sur une durée prédéterminée, de la température d'afflux, comme taux de variation de température d'afflux de manière séquentielle depuis le début du fonctionnement du compresseur, et le calcul d'un taux de variation, sur une durée prédéterminée, de la température de flux sortant, comme taux de variation de température de flux sortant de manière séquentielle depuis le début du fonctionnement du compresseur ;
le réglage, comme température minimale, de la température d'afflux avec laquelle une différence entre le taux de variation de température d'afflux et le taux de variation de température de flux sortant devient non supérieure à un seuil de taux de variation prédéfini ;
le réglage d'une température non inférieure à la température minimale, comme température cible ; et
le contrôle du compresseur de l'unité de pompe à chaleur de sorte que la température du fluide qui s'écoule vers le dispositif à fluide devienne égale à la température cible.
